# EUROPÄISCHE PATENTANMELDUNG

(11) **EP 4 443 838 A1**
(43) Veröffentlichungstag der Anmeldung: **09.10.2024**
(21) Anmeldenummer: 24164990.4
(22) Anmeldetag: 21.03.2024
(51) Int. Cl.: H04L 41/50, H04L 41/0806, H04L 41/08

(54) **VERFAHREN FÜR EIN AUTOMATISIERTES ÜBERMITTELN EINER NETZWERK-KONFIGURATION FÜR EINE ODER MEHRERE TEXTILMASCHINEN**

(30) Priorität: 06.04.2023 LU 503867
(71) Anmelder: Saurer Spinning Solutions GmbH & Co. KG, 52531 Übach-Palenberg (DE)
(72) Erfinder: Hurtz, Bert, 41179 Mönchengladbach (DE); Hüls, Jürgen, 40670 Meerbusch (DE)
(74) Vertreter: Morgenthum-Neurode, Mirko

(57) **Zusammenfassung**

Die Erfindung betrifft ein Verfahren für ein automatisiertes Übermitteln einer Netzwerk-Konfiguration für eine oder mehrere Textilmaschinen in einem Netzwerk, wobei eine Datenübertragung zwischen einer Konfigurationseinheit und der einen oder mehreren Textilmaschinen über ein Kommunikationsnetz zu dem Netzwerk erfolgt, wobei das Verfahren die nachfolgenden Schritte umfasst, die von der Konfigurationseinheit ausgeführt werden:
- Initiieren eines Erfassens der einen oder mehreren Textilmaschinen innerhalb des Netzwerks über das Kommunikationsnetz für das Übermitteln der Netzwerk-Konfiguration,
- Identifizieren der einen oder mehrerer Textilmaschinen innerhalb des Netzwerks auf Basis eines durch das initiierte Erfassen erhaltenen jeweiligen Identifikators der einen oder mehreren Textilmaschinen,
- Bereitstellen der Netzwerk-Konfiguration für jede erfasste und identifizierte Textilmaschine in dem Netzwerk,
- Übermitteln der jeweils bereitgestellten Netzwerk-Konfiguration an die eine oder mehrere identifizierten Textilmaschinen in dem Netzwerk auf Basis des jeweiligen Identifikators.

## Beschreibung

Die vorliegende Erfindung betrifft ein Verfahren für ein automatisiertes Übermitteln einer Netzwerk-Konfiguration für eine oder mehrere Textilmaschinen. Ferner bezieht sich die Erfindung auf ein System, eine Vorrichtung, ein Computerprogramm sowie eine Textilmaschine zu diesem Zweck.

Aus dem Stand der Technik ist es bekannt, dass in Textilbetrieben wie z.B. Spinnereien immer häufiger Textilmaschinen an ein sogenanntes Leitsystem angebunden werden. Dadurch können beispielsweise die Produktionsdaten und Statusmeldungen aller Textilmaschinen an zentraler Stelle visualisiert oder anderweitig weiterverarbeitet werden. Umgekehrt können Produktionsvorgaben und -parameter (z. B. Rezepte) an zentraler Stelle verwaltet und an die einzelnen Textilmaschinen übertragen werden. In der Regel verfügt jede Textilmaschine über einen eigenen Leit- oder Bedienrechner, der zum einen über einen Feldbus mit den Textilmaschinenkomponenten verbunden ist, und zum anderen über eine Schnittstelle zum Leitsystem verfügt, die in der Regel als Netzwerk-Schnittstelle ausgeführt ist. Dazu ist es erforderlich, dass alle beteiligten Komponenten, d.h. Leitsystem und Textilmaschinen, über eine eindeutige Adresse bzw. IP-Adresse verfügen. Damit das Leitsystem jede Textilmaschine gezielt ansprechen bzw. von den Textilmaschinen kommende Daten korrekt zuordnen kann, muss es die Adressen aller angeschlossenen Textilmaschinen kennen.

Allerdings ist es ein Nachteil bekannter Lösungen, dass die Adressverwaltung von Textilmaschinen manuell erfolgt, d.h. die Adresse jeder Textilmaschine wird von Hand in eine Liste eingetragen. Ferner ist es nachteilig, dass die Adresse einer Textilmaschine an dieser selbst auch manuell eingestellt wird. Diese Einstellung ist bei Inbetriebnahme jeder neuen Textilmaschine erforderlich, aber auch beim Austausch eines Textilmaschinen-Leitrechners oder wenn der Kunde seine Textilmaschinen umorganisiert. Der Einstellvorgang selbst ist zudem vom Typ der Textilmaschine abhängig. Dabei ist nachteilig, dass die manuelle Einstellung und Verwaltung der Adressen sehr aufwändig und fehleranfällig sein kann.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Lösung zur Vereinfachung der Einstellung und Verwaltung von Textilmaschinen vorzuschlagen.

Gegenstand der Erfindung ist ein Verfahren mit den Merkmalen des Anspruchs 1, ein System mit den Merkmalen des Anspruchs 11, eine Vorrichtung mit den Merkmalen des Anspruchs 13, ein Computerprogramm mit den Merkmalen des Anspruchs 14 sowie eine Textilmaschine mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, der erfindungsgemäßen Vorrichtung, dem erfindungsgemäßen Computerprogramm sowie der erfindungsgemäßen Textilmaschine, und jeweils umgekehrt, so dass bezüglich der Offenbarung zu den einzelnen Erfindungsaspekten stets wechselseitig Bezug genommen wird bzw. werden kann.

Das Verfahren kann als ein computerimplementiertes Verfahren ausgeführt sein, oder auch nur teilweise durch einen Computer ausgeführt werden. Letzteres kann bedeuten, dass auch Verfahrensschritte vorgesehen sind, welche durch die zumindest eine Textilmaschine ausgeführt werden.

Gegenstand der Erfindung ist insbesondere ein Verfahren für ein automatisiertes Übermitteln einer Netzwerk-Konfiguration für eine oder mehrere Textilmaschinen in einem Netzwerk, wobei eine Datenübertragung zwischen einer Konfigurationseinheit und der einen oder mehreren Textilmaschinen über ein Kommunikationsnetz zu dem Netzwerk erfolgt, wobei das Verfahren die nachfolgenden Schritte umfasst, die von der Konfigurationseinheit ausgeführt werden:
- Initiieren eines Erfassens der einen oder mehreren Textilmaschinen innerhalb des Netzwerks über das Kommunikationsnetz für das Übermitteln der Netzwerk-Konfiguration,
- Identifizieren der einen oder mehreren Textilmaschinen innerhalb des Netzwerks auf Basis eines durch das initiierte Erfassen erhaltenen jeweiligen Identifikators der einen oder mehreren Textilmaschinen,
- Bereitstellen der Netzwerk-Konfiguration für jede erfasste und identifizierte Textilmaschine in dem Netzwerk,
- Übermitteln der jeweils bereitgestellten Netzwerk-Konfiguration an die eine oder mehrere identifizierten Textilmaschinen in dem Netzwerk auf Basis des jeweiligen Identifikators.

Dies hat den Vorteil, dass eine einfachere und schnellere Einstellung oder Konfiguration einer Textilmaschine automatisiert ausgeführt werden kann, weil die Initiierung des erfindungsgemäßen Verfahrens von der Konfigurationseinheit kontrolliert wird. Dies kann vorteilhafterweise bei entsprechender Programmierung wiederholt ausgeführt werden. Ferner hat dies den Vorteil, dass eine automatische Erfassung und eindeutige Identifizierung aller Textilmaschinen in einem Netzwerk, auch von solchen, die zu einem späteren Zeitpunkt hinzugefügt werden, eine Verwaltung der Textilmaschinen deutlich vereinfacht und effizienter macht. Ebenso ermöglicht das erfindungsgemäße Verfahren, dass für die erfassten und identifizierten Textilmaschinen nach der übermittelten Netzwerk-Konfiguration vorteilhafterweise die verfügbaren Dienste innerhalb des Systems effizient genutzt werden können.

Datenübertragung bedeutet beispielsweise das Übermitteln einer Anfrage oder einer Antwort und/oder das Übermitteln einer jeweiligen Netzwerk-Konfiguration und/oder das Übermitteln eines Kommandos von der Konfigurationseinheit an die eine oder mehrere Textilmaschinen.

Unter einer Konfigurationseinheit ist insbesondere eine Vorrichtung für ein Konfigurieren einer oder mehrerer Textilmaschinen, beispielsweise eine Vorrichtung zur Datenverarbeitung, zu verstehen, welche für die Konfiguration von Software- und Hardwarekomponenten eines Systems und/oder Netzwerks vorgesehen ist. Eine Konfiguration umfasst z.B. eine Anpassung von Programmen und/oder Hardwarebestandteilen des Systems und/oder des Netzwerks.

Die eine oder mehreren Textilmaschinen umfassen vorteilhafterweise wenigstens eine der folgenden: Spinnmaschine, Textilmaschine für die Faservorbereitung, Textilmaschine für die Spinnereivorbereitung, Ringspinnmaschine, Kompaktspinnmaschine, Rotorspinnmaschine, Luftspinnmaschine, Automationsmaschinen, Spulmaschine, Texturiermaschine. Eine Textilmaschine kann zudem eine Vielzahl benachbart zueinander angeordneter Arbeitsstellen aufweisen. Die Arbeitsstellen können z. B. Spinnstellen oder dergleichen sein. Ebenfalls ist eine Ausbildung der Arbeitsstellen als Spulstellen möglich, an denen ein Faden auf eine Spule, bspw. eine Kreuzspule, aufgewickelt wird. So wird bspw. an einer Spinnmaschine aus einem vorgelegten Faserverbund ein Faden hergestellt, der nach Verlassen einer Spinneinheit - in Richtung des Fadenlaufs betrachtet - nacheinander eine Abzugseinrichtung und einen Fadenspeicher passiert und abschließend auf der Fadenaufspulvorrichtung, d.h. der Spulstelle, aufgewickelt wird.

Ein Identifikator in einem Netzwerk oder Netz wird verwendet, um eindeutige Identitäten für Geräte wie beispielsweise Textilmaschinen, Anwendungen oder Dienste zu definieren. Ein Beispiel für einen Identifikator ist z.B. die IP-Adresse, die verwendet wird, um eine bestimmte Textilmaschine als Gerät in dem Netzwerk zu identifizieren. Andere Beispiele für Identifikatoren sind MAC-Adressen oder auch ein Hostname. Die technischen Merkmale eines Identifikators können dessen Länge, Format, Gültigkeitsdauer und Eindeutigkeit umfassen. Zum Beispiel besteht eine IPv4-Adresse aus vier Blöcken von Zahlen, während eine IPv6-Adresse aus acht Blöcken von Zahlen und Buchstaben besteht. Eine MAC-Adresse besteht aus sechs Blöcken von Zahlen und Buchstaben, während ein Hostname aus einer Zeichenfolge von Buchstaben, Zahlen und Bindestrichen besteht. Die Eindeutigkeit eines Identifikators ist ein wichtiges Merkmal, um sicherzustellen, dass jede Textilmaschine, jede Anwendung oder jeder Dienst im Netzwerk eindeutig identifiziert werden kann.

Gemäß einem weiteren Vorteil kann vorgesehen sein, dass das Initiieren den nachfolgenden Schritt umfasst:
- Übermitteln einer Anfrage an die eine oder mehrere Textilmaschinen innerhalb des Netzwerks, wobei die Anfrage als eine Unicast- und/oder eine Multicast- und/oder eine Broadcast-Anfrage ausgeführt ist.

Zudem ist im Rahmen der Erfindung denkbar, dass die Anfrage eine IP-Adresse und/oder eine MAC-Adresse umfasst.

Dies ermöglicht es, dass eine Erfassung aller Textilmaschinen in dem Netzwerk deutlich effektiver und effizienter gewährleistet werden kann. Ferner hat das Versenden einer Anfrage an alle Textilmaschinen den Vorteil, auf Basis der übermittelten Anfrage die für die Konfiguration notwendige Information wie beispielsweise die MAC-Adresse der Textilmaschine auf Anfrage zu erhalten.

Eine Broadcast-Anfrage in einem Netzwerk ist dabei eine Methode, um Informationen oder Anfragen an alle Maschinen in einem Netzwerk zu senden. Ein Beispiel für eine solche Anfrage wäre die Suche nach einem bestimmten Gerät oder Service im Netzwerk. Die technischen Merkmale einer Broadcast-Anfrage können die verwendete Protokollschicht, die IP-Adresse oder das Port-Nummer-Management einer Broadcast-Anfrage sein.

Es können auch optional andere Arten von Anfragen gesendet werden, beispielsweise eine Unicast-Anfrage und/oder eine Multicast-Anfrage. Die Unicast-Anfrage richtet sich dabei nur an einem Empfänger, die Multicast-Anfrage kann sich an mehrere oder eine Gruppe von Empfängern richten.

Es kann im Rahmen der Erfindung vorgesehen sein, dass das Identifizieren den nachfolgenden Schritt umfasst:
- Empfangen einer Antwort von der einen oder mehreren Textilmaschinen aus dem Netzwerk, wobei die Antwort den jeweiligen Identifikator der Textilmaschine aufweist, wobei der jeweilige Identifikator für das Bereitstellen und Übermitteln der Netzwerk-Konfiguration an die eine oder mehreren Textilmaschinen in dem Netzwerk verwendet wird.

Ein weiterer Vorteil im Rahmen der Erfindung ist erzielbar, wenn der jeweilige Identifikator der einen oder mehreren Textilmaschinen eine MAC-Adresse aufweist.

Dies hat den Vorteil, dass es schneller und sehr einfach durch den erhaltenen Identifikator gewährleistet werden kann, dass die Netzwerk-Konfiguration effizienter an die eine oder mehrere Textilmaschinen bereitgestellt und übermittelt werden kann. Der empfangene Identifikator, vorzugsweise die empfangene MAC-Adresse, ermöglicht es der Konfigurationseinheit, eine eindeutige Adresse einer oder mehrerer Textilmaschinen in dem Netzwerk für eine effektive und schnelle Übermittlung der jeweiligen Netzwerk-Konfiguration zu erhalten.

Weiter ist im Rahmen der Erfindung denkbar, dass das Verfahren den weiteren nachfolgenden Schritt umfasst, der von der Konfigurationseinheit ausgeführt wird:
- Empfangen einer Bestätigungsnachricht von der einen oder mehreren Textilmaschinen in dem Netzwerk, dass die übermittelte Netzwerk-Konfiguration in der einen oder mehreren Textilmaschinen eingestellt ist.

Dies ermöglicht es der Konfigurationseinheit auf eine sehr einfache und schnelle Art, die Information über den erfolgreichen Abschluss der Konfiguration der jeweiligen Textilmaschine zu erhalten, um den entsprechenden Status zu speichern und der nun konfigurierten Textilmaschine vorteilhafterweise weitere Dienste oder Services anzubieten.

Außerdem kann es im Rahmen der Erfindung von Vorteil sein, dass die Datenübertragung zwischen der Konfigurationseinheit und der einen oder mehreren Textilmaschinen mittels eines Netzwerkprotokolls, insbesondere mittels eines User Datagramm Protokolls, vorzugsweise mittels eines Auto-Discovery-Protokolls, erfolgt.

Dies hat den Vorteil, dass bei einer Datenübertragung für eine Netzwerk-Konfiguration an eine oder mehrere Textilmaschinen eine Kollision mit anderen Geräten oder Maschinen innerhalb des Netzwerks vorteilhafterweise verhindert werden kann. Ferner ermöglicht dies, dass eine effiziente, sichere und zuverlässige Datenübertragung zwischen der Konfigurationseinheit und der einen oder mehreren Textilmaschinen gewährleistet ist.

Ein Netzwerkprotokoll ist eine Festlegung von Regeln und Verfahren, welche die Kommunikation zwischen den Netzwerkkomponenten oder den Geräten in einem Netzwerk ermöglichen. Ein Netzwerkprotokoll definiert, wie Daten zwischen den Geräten ausgetauscht werden und wie diese Daten verarbeitet werden. Es regelt ferner die Struktur von Datenpaketen, die Adressierung und Routing von Datenpaketen sowie die Fehlererkennung und -korrektur. Beispiele für Netzwerkprotokolle sind das Internet Protocol (IP), das Transmission Control Protocol (TCP) und das User Datagram Protocol (UDP). Technische Merkmale eines Netzwerkprotokolls können u.a. das Format von Datenpaketen, die Größe von Datenpaketen, die Art der Übertragung, d.h. verbindungsorientiert oder verbindungslos oder eine Überprüfung von Datenpaketen auf Fehler umfassen.

Es kann im Rahmen der Erfindung vorgesehen sein, dass die Datenübertragung in der Form eines Datagramms vorgesehen ist, wobei das Datagramm wenigstens einen Kopfteil aufweist. Gemäß einem weiteren Vorteil kann vorgesehen sein, dass das Datagramm den Kopfteil und einen Datenteil umfasst, wobei das Datagramm eine Gesamtlänge aufweist, die so bemessen ist, dass eine sichere und vollständige Datenübertragung innerhalb eines Frames oder eines Datenübertragungsrahmens gewährleistet ist und vorteilhafterweise keine Datenpakete verloren gehen können. Vorzugsweise weist das Kopfteil eine Gesamtlänge von wenigstens 15 Byte bis einschließlich 30 Byte, weiter bevorzugt von wenigstens 18 Byte bis einschließlich 22 Byte auf. Damit ist sichergestellt, dass die relevanten Informationen enthalten sind. Sofern nach der bevorzugten Ausführungsform zusätzlich zum Kopfteil ein Datenteil vorgesehen ist, so weist das Datenteil in bevorzugter Weise eine Gesamtlänge von wenigstens 1 Byte bis maximal 255 Byte auf. Das Datagramm kann somit nach einer bevorzugten Ausführungsform eine Gesamtlänge von wenigstens 15 Byte bis einschließlich 285 Byte, weiter bevorzugt von wenigstens 18 Byte bis einschließlich 277 Byte und absolut bevorzugt von wenigstens 20 Byte bei Vorsehen nur eines Kopfteils bis einschließlich 275 Byte bei Vorsehen eines Kopfteils sowie eines Datenteils aufweisen.

Unter einem Frame (engl.) versteht man eine Anzahl von Daten, die als eine Einheit übertragen werden. Darin befinden sich Adressen und die notwendigen Kontrollinformationen eines Netzwerkprotokolls. Ein Frame wird in der Regel seriell Bit für Bit übertragen und beinhaltet einen Kopfteil (Engl.: Header-Feld), sowie ein Trailer-Feld. Das Trailer-Feld ist der Datensatz, der das Frame beendet. Trailer-Felder sind Datenfelder, welche Daten für die Fehlererkennung und - korrektur, Prüfsummenfelder und Flags als Kennzeichnungsfelder umfassen können. Sie "rahmen" (engl.: frame) die Daten ein.

Ein Datagramm ist eine Einheit von Daten, die als einzelnes Paket über ein Netzwerk übertragen wird. Es enthält typischerweise einen Datenteil oder eine Nutzlast, die die eigentlichen Daten enthält, sowie einen Kopfteil, welcher Informationen über die Quelle und das Ziel der Daten, die Größe des Pakets, die Prüfsumme und andere spezifische Informationen enthalten kann. Datagramme werden typischerweise in verbindungslosen Netzwerkprotokollen wie dem User Datagram Protocol (UDP) verwendet, bei denen keine vorherige Verbindung zwischen den beteiligten Geräten aufgebaut werden muss. Dadurch sind Datagramme einfacher und schneller zu übertragen als andere Arten von Datenpaketen, die für eine verbindungsorientierte Übertragung verwendet werden, wie z. B. das Transmission Control Protocol (TCP). Technische Merkmale eines Datagramms können beispielsweise die maximale Größe des Pakets, die Länge der Kopf- und Fußzeilen, die Überprüfung der Datenintegrität durch eine Prüfsumme sowie eine Adressierung und Routing-Informationen sein.

Es ist weiter möglich, dass das Netzwerk als ein lokales Netz, vorzugsweise ein Datennetz und/oder ein Ethernet und/oder ein LAN (Local Area Network) oder ein WLAN (Wireless Local Area Network) ausgebildet ist. Ferner kann das Kommunikationsnetz als ein Festnetz, vorzugsweise als ein Internet, oder ein Funknetz, vorzugsweise Bluetooth oder WLAN-Netz, oder ein Mobilfunknetz, insbesondere gemäß 2G/3G/4G/5G/6G-Standard, und/oder als ein Campusnetz, ausgebildet sein. Das Netzwerk und das Kommunikationsnetz sind entsprechend unterschiedliche Netze zur Datenübertragung. Insbesondere basieren das Netzwerk und das Kommunikationsnetz auf unterschiedlichen Netzwerktechnologien.

Ferner kann es im Rahmen der Erfindung vorgesehen sein, dass das Netzwerk mindestens zwei Teilnetzwerke, insbesondere Subnetze, umfasst. Dabei kann das Netzwerk und jedes Teilnetzwerk jeweils eine Netzwerkschnittstelle zum Kommunikationsnetz umfassen, wobei die Netzwerkschnittstelle dazu angepasst ist, dass eine Datenübertragung zwischen der Konfigurationseinheit und der einen oder mehreren Textilmaschinen über die jeweilige Netzwerkschnittstelle des Netzwerks und/oder des Teilnetzwerks erfolgt. Dies hat den Vorteil, dass eine direkte und effektivere Datenübertragung in eine hierarchische Netzwerk-Struktur erfolgen kann. Ferner ermöglicht dies, dass das Übermitteln von Anfragen an die Textilmaschinen vorteilhafterweise in die Teilnetzwerke oder Subnetze gewährleistet ist. Ferner ermöglicht dies, dass durch die Aufteilung des Netzwerks in Teilnetzwerke oder Subnetze eine effizientere Verwaltung und Steuerung der Datenübertragung gewährleistet ist und die Leistung und Sicherheit des gesamten Netzwerks verbessert werden kann. Die jeweilige Netzwerkschnittstelle kann bspw. als eine Funkschnittstelle und/oder als eine Bluetooth-Schnittstelle oder als eine Mobilfunkschnittstelle oder als ein Netzwerk-Router ausgeführt sein.

Unter einem Subnetz oder Teilnetzwerk ist insbesondere ein Abschnitt des Netzwerks zu verstehen, welcher aus einer oder mehreren Textilmaschinen bestehen kann, die beispielsweise in derselben geografischen oder örtlichen Lage auf einem Industriegelände verbunden sind. Das Subnetz wird durch eine Subnetzmaske von anderen Netzwerken getrennt und erhält eine eigene Netzwerkadresse. Das ermöglicht es, den Datenverkehr innerhalb des Subnetzwerks effizienter zu verwalten und zu steuern.

Technische Merkmale eines Subnetzes können die Anzahl der Geräte im Subnetz, die Größe des Subnetzes, die Subnetzmaske, die Routing-Informationen, die Protokolle und die Bandbreite umfassen. Subnetze sind eine wichtige Komponente von Netzwerken, insbesondere in großen Unternehmensnetzwerken.

Ebenfalls Gegenstand der Erfindung ist ein System für ein automatisiertes Übermitteln einer Netzwerk-Konfiguration, umfassend eine Konfigurationseinheit und eine oder mehrere Textilmaschinen in einem Netzwerk, wobei eine Datenübertragung zwischen einer Konfigurationseinheit und der einen oder mehreren Textilmaschinen über ein Kommunikationsnetz zu dem Netzwerk erfolgt, wobei das System dazu angepasst ist, das erfindungsgemäße Verfahren auszuführen.

Außerdem ist es von Vorteil, wenn das das Netzwerk mindestens zwei Teilnetzwerke, insbesondere Subnetze, umfasst, wobei das Netzwerk und jedes Teilnetzwerk jeweils eine Netzwerkschnittstelle zum Kommunikationsnetz aufweist, wobei die Netzwerkschnittstelle dazu angepasst ist, dass eine Datenübertragung zwischen der Konfigurationseinheit und der einen oder mehreren Textilmaschinen über die jeweilige Netzwerkschnittstelle des Netzwerks und/oder des Teilnetzwerks erfolgt.

Damit bringt das erfindungsgemäße System die gleichen Vorteile mit sich, wie sie ausführlich mit Bezug auf das erfindungsgemäße Verfahren beschrieben worden sind.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann. Ferner kann das Computerprogramm auch direkt in einer Maschinensoftware der Maschine integriert sein.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Ebenfalls Gegenstand der Erfindung ist eine Textilmaschine, umfassend eine Netzwerkschnittstelle zu einem Kommunikationsnetz, wobei eine Datenübertragung zwischen der Textilmaschine und einer Konfigurationseinheit über die Netzwerkschnittstelle zu dem Kommunikationsnetz erfolgt, wobei die Netzwerkschnittstelle dazu angepasst ist, das erfindungsgemäße Verfahren auszuführen. Damit bringt die erfindungsgemäße Textilmaschine die gleichen Vorteile mit sich, wie sie ausführlich mit Bezug auf ein erfindungsgemäßes Verfahren beschrieben worden sind.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: schematisch ein Ausführungsbeispiel des erfindungsgemäßen Verfahrens,
- Fig. 2: schematisch ein Ausführungsbeispiel für eine erfindungsgemäße Vorrichtung sowie ein erfindungsgemäßes Computerprogramm, und
- Fig. 3: schematisch ein Ausführungsbeispiel für ein erfindungsgemäßes System.

In den nachfolgenden Figuren werden für die gleichen technischen Merkmale auch von unterschiedlichen Ausführungsbeispielen die identischen Bezugszeichen verwendet.

Es ist eine Kernidee der Erfindung, dass das Initiieren der Zuweisung einer Netzwerk-Konfiguration nicht von einer Textilmaschine 1, sondern von einer zentralen Stelle, d.h. beispielsweise dem Leitsystem, welche eine Konfigurationseinheit 2 umfasst, initiiert wird. Für das automatische Übermitteln der Netzwerk-Konfiguration scannt die Konfigurationseinheit das Netzwerk 10, d.h. sie startet eine Erfassung von Textilmaschinen innerhalb des Netzwerks 10 durch das Übermitteln oder Senden einer Anfrage wie zum Beispiel einer Broadcast-Anfrage. Als Reaktion auf die übermittelte Anfrage empfängt die Konfigurationseinheit 2 eine oder mehrere Antworten oder Antwortnachrichten von einer oder mehreren Textilmaschinen 1. Dadurch erhält das Leitsystem jeweils mit einer Antwort einer Textilmaschine 1 einen Identifikator, welcher beispielsweise die MAC-Adresse der Textilmaschine 1 aufweist. Der Identifikator unterstützt die Einheit 2 einerseits bei der Identifizierung von Textilmaschinen innerhalb des Netzwerks anhand der erhaltenen MAC-Adresse und andererseits wird auf Basis der jeweiligen empfangenen MAC-Adresse das Übermitteln der Netzwerk-Konfiguration an die Textilmaschine durchgeführt. Nach der durchgeführten Netzwerk-Konfiguration kann eine Textilmaschine oder mehrere Textilmaschinen die verschiedenen Services oder Dienste des Systems 50 nutzen.

Bei der Datenübertragung zwischen dem Leitsystem bzw. der Konfigurationseinheit 2 und einer oder mehrerer Textilmaschinen 1 kommt ein Übertragungsprotokoll oder ein Netzwerkprotokoll/Netzprotokoll zum Einsatz, welches Kollisionen bei der Datenübertragung mit anderen Geräten oder Maschinen innerhalb des Netzwerks verhindert. Das Protokoll basiert auf einem verbindungslosen UDP/IP-Protokoll.

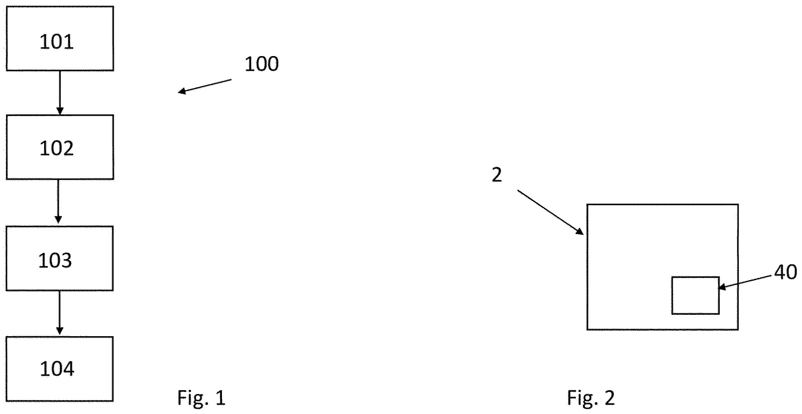

In Fig. 1 ist ein Ausführungsbeispiel für ein erfindungsgemäßes Verfahren 100. Fig. 1 veranschaulicht gemäß Ausführungsbeispielen der Erfindung ein Verfahren 100 für ein automatisiertes Übermitteln einer Netzwerk-Konfiguration für eine oder mehrere Textilmaschinen 1 in einem Netzwerk 10. Dabei erfolgt eine Datenübertragung zwischen einer Konfigurationseinheit 2 und der einen oder mehreren Textilmaschinen 1 über ein Kommunikationsnetz 30 zu dem Netzwerk 10. Das Verfahren 100 umfasst die nachfolgenden Schritte, die von der Konfigurationseinheit 2 ausgeführt werden.

Gemäß Schritt 101 wird von der Konfigurationseinheit 2 ein Erfassen von einer oder mehreren Textilmaschinen 1 innerhalb des Netzwerks 10 über das Kommunikationsnetz 30 für das Übermitteln der Netzwerk-Konfiguration initiiert.

Dann wird in Schritt 102 die eine oder mehreren Textilmaschinen 1 innerhalb des Netzwerks 10 auf Basis eines durch das initiierte Erfassen 101 erhaltenen jeweiligen Identifikators der einen oder mehreren Textilmaschinen 1 identifiziert.

In Schritt 103 wird die Netzwerk-Konfiguration für jede erfasste 101 und identifizierte 102 Textilmaschine 1 in dem Netzwerk 10 von der Konfigurationseinheit 2 bereitgestellt.

Gemäß Schritt 104 wird die jeweils bereitgestellte 103 Netzwerk-Konfiguration von der Konfigurationseinheit 2 an die eine oder mehrere identifizierten 102 Textilmaschinen 1 in dem Netzwerk 10 auf Basis des jeweiligen Identifikators übermittelt.

Abschließend kann in einem weiteren Schritt des erfindungsgemäßen Verfahrens von der Konfigurationseinheit 2 eine Bestätigungsnachricht von der einen oder mehreren Textilmaschinen 1 in dem Netzwerk 10 empfangen werden, dass die übermittelte 104 Netzwerk-Konfiguration in der einen oder mehreren Textilmaschinen 1 eingestellt ist.

In Fig. 2 ist ein Computerprogramm 40 dargestellt, welches Befehle umfasst, die bei der Ausführung des Programms durch einen Computer 2 diesen veranlassen, die Schritte des Verfahrens 100 gemäß Ausführungsbeispielen der Erfindung auszuführen. Ebenfalls ist eine Vorrichtung 2 zur Datenverarbeitung abgebildet, wobei diese Datenverarbeitungsvorrichtung 2 Mittel zur Ausführung der Schritte eines Verfahrens 100 gemäß Ausführungsbeispielen der Erfindung umfassen kann.

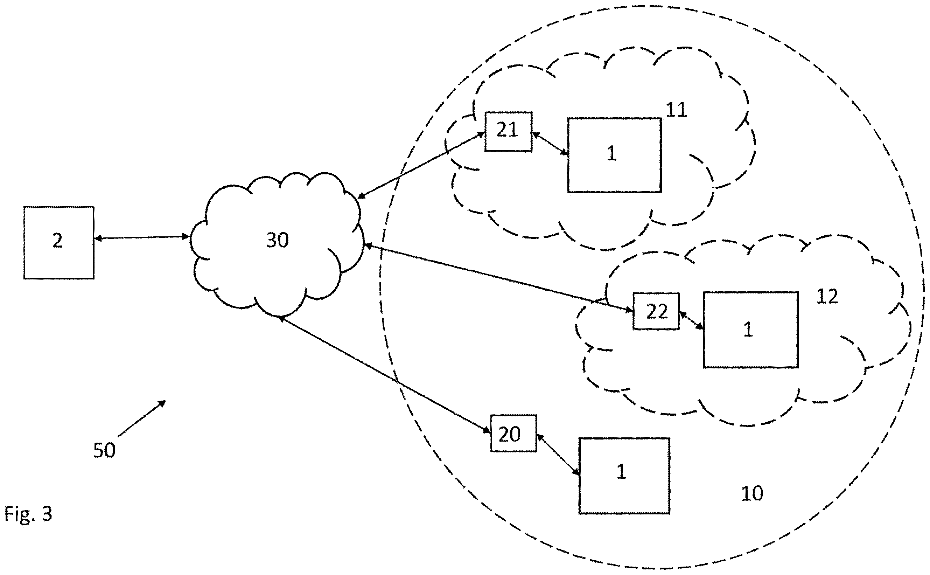

In Fig. 3 ist ein Ausführungsbeispiel für ein erfindungsgemäßes System 50 dargestellt. Fig. 3 zeigt ein beispielhaftes System 50, welches eine Konfigurationseinheit 2 und mehrere Textilmaschinen 1 in einem Netzwerk 10 umfasst. Außerdem sind zwei Teilnetzwerke 11, 12 oder Subnetze 11, 12 des Netzwerks 10 in der Fig. 3 dargestellt.

Ferner wird in Fig. 3 ein Kommunikationsnetz 30 abgebildet, über welches eine Datenübertragung zwischen der Konfigurationseinheit 2, welche beispielsweise einem Leitsystem zugeordnet sein kann, und der einen oder mehreren Textilmaschinen 1 erfolgen kann.

Das in Fig. 3 abgebildete Netzwerk 10 und jedes Teilnetzwerk 11, 12 weist jeweils eine Netzwerkschnittstelle 20, 21, 22 zum Kommunikationsnetz 30 auf. Die Netzwerkschnittstelle 20, 21, 22 ist so angepasst, dass eine Datenübertragung zwischen der Konfigurationseinheit 2 und der einen oder mehreren Textilmaschinen 1 über die jeweilige Netzwerkschnittstelle 20, 21, 22 des Netzwerks 10 und/oder des Teilnetzwerks 11, 12 erfolgen kann.

Der Ablauf für die Zuweisung oder Übermittlung einer Netzwerk-Konfiguration, umfassend eine notwendige IP-Adresse, erfolgt in dem in Fig. 3 dargestellten System 50 dabei automatisch und wiederkehrend, initiiert durch die Konfigurationseinheit 2 des Leitsystems oder zentralen Leitrechners.

Zunächst initiiert die Konfigurationseinheit 2 eine Erfassung und Identifikation einer oder mehrerer Textilmaschinen 1 innerhalb des Netzwerks 10 und der beiden Teilnetzwerke 11, 12. Dabei wird eine Broadcast-Anfrage von der Konfigurationseinheit über das Kommunikationsnetz 30 an die eine oder mehrere Textilmaschinen 1 gesendet, wobei die Anfrage eine Broadcast-IP-Adresse und/oder eine Broadcast-MAC-Adresse aufweist. Die Anfrage wird dabei über die jeweilige Netzwerkschnittstelle 20, 21, 22 an die jeweilige Textilmaschine 1 übertragen.

Dann empfängt die Einheit 2 eine oder mehrere Antworten von der einen oder mehreren Textilmaschinen 1 über die jeweilige Netzwerkschnittstelle 20, 21, 22 und über das Kommunikationsnetz 30, wobei die Antwort die IP-Adresse der Konfigurationseinheit 2 und die jeweilige MAC-Adresse der Textilmaschine umfasst.

Danach übermittelt die Konfigurationseinheit 2 eine Nachricht über das Kommunikationsnetz 30 zu der einen oder mehreren Textilmaschinen 1, wobei die Nachricht die Netzwerk-Konfiguration für die jeweilige Textilmaschine 1 aufweist und die Nachricht eine Broadcast-IP-Adresse und die jeweilige MAC-Adresse der Textilmaschine 1 umfasst.

Die jeweilige Textilmaschine 1 stellt die vorgegebene Netzwerk-Konfiguration ein und bestätigt dies mit einer entsprechenden Bestätigungsnachricht, wobei diese Nachricht die IP-Adresse der Konfigurationseinheit 2 und jeweils die MAC-Adresse der Textilmaschine 1 aufweist.

Anschließend übermittelt die Konfigurationseinheit 2 eine Nachricht an alle Textilmaschinen 1 innerhalb des Netzwerks 10 und die beiden Teilnetzwerke 11, 12, wobei die Nachricht Informationen über die verfügbaren Dienste aufweist.

Die Netzwerkschnittstellen 21, 22 der beiden Teilnetzwerke 11, 12 können so konfiguriert werden, dass eine Datenübertragung zwischen der Konfigurationseinheit 2 und den Teilnetzwerken 11, 12 gewährleistet ist und so angepasst werden, dass eine oder mehrere Textilmaschinen 1 in dem jeweiligen Teilnetzwerk 11, 12 erfasst und identifiziert werden können sowie der Datenverkehr innerhalb des Teilnetzwerks 11, 12 gesteuert werden kann. Die Subnetzmaske des jeweiligen Teilnetzwerks 11, 12 definiert dabei den Bereich der IP-Adresse, der dem Subnetzwerk zugewiesen werden soll.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Textilmaschine
- 2: Konfigurationseinheit
- 10: Netzwerk
- 11,12: Teilnetzwerk
- 20,21,22: Netzwerkschnittstelle
- 30: Kommunikationsnetz
- 40: Computerprogramm
- 50: System
- 100: Verfahren
- 101: erster Verfahrensschritt, initiieren
- 102: zweiter Verfahrensschritt, identifizieren
- 103: dritter Verfahrensschritt, bereitstellen
- 104: vierter Verfahrensschritt, übermitteln

## Patentansprüche

1. Verfahren (100) für ein automatisiertes Übermitteln einer Netzwerk-Konfiguration für eine oder mehrere Textilmaschinen (1) in einem Netzwerk (10), wobei eine Datenübertragung zwischen einer Konfigurationseinheit (2) und der einen oder mehreren Textilmaschinen (1) über ein Kommunikationsnetz (30) zu dem Netzwerk (10) erfolgt, wobei das Verfahren (100) die nachfolgenden Schritte umfasst, die von der Konfigurationseinheit (2) ausgeführt werden:
- Initiieren (101) eines Erfassens der einen oder mehreren Textilmaschinen (1) innerhalb des Netzwerks (10) über das Kommunikationsnetz (30) für das Übermitteln der Netzwerk-Konfiguration,
- Identifizieren (102) der einen oder mehreren Textilmaschinen (1) innerhalb des Netzwerks (10) auf Basis eines durch das initiierte Erfassen (101) erhaltenen jeweiligen Identifikators der einen oder mehreren Textilmaschinen (1),
- Bereitstellen (103) der Netzwerk-Konfiguration für jede erfasste (101) und identifizierte (102) Textilmaschine (1) in dem Netzwerk (10),
- Übermitteln (104) der jeweils bereitgestellten Netzwerk-Konfiguration an die eine oder mehrere identifizierten Textilmaschinen (1) in dem Netzwerk (10) auf Basis des jeweiligen Identifikators.

2. Verfahren (100) nach Anspruch 1, **dadurch gekennzeichnet, dass** das Initiieren (101) den nachfolgenden Schritt umfasst:
- Übermitteln einer Anfrage an die eine oder mehrere Textilmaschinen (1) innerhalb des Netzwerks (10), wobei die Anfrage als eine Unicast- und/oder eine Multicast- und/oder eine Broadcast-Anfrage ausgeführt ist.

3. Verfahren (100) nach Anspruch 2, **dadurch gekennzeichnet, dass** die Anfrage eine IP-Adresse und/oder eine MAC-Adresse umfasst.

4. Verfahren (100) nach Anspruch 1 oder 2, **dadurch gekennzeichnet, dass** das Identifizieren (102) den nachfolgenden Schritt umfasst:
- Empfangen einer Antwort von der einen oder mehreren Textilmaschinen (1) aus dem Netzwerk (10), wobei die Antwort den jeweiligen Identifikator der Textilmaschine (1) aufweist, wobei der jeweilige Identifikator für das Bereitstellen (103) und Übermitteln (104) der Netzwerk-Konfiguration an die eine oder mehrere Textilmaschinen (1) in dem Netzwerk (10) verwendet wird.

5. Verfahren (100) nach Anspruch 4, **dadurch gekennzeichnet, dass** der jeweilige Identifikator der einen oder mehreren Textilmaschinen (1) eine MAC-Adresse aufweist.

6. Verfahren (100) nach einem der vorhergehenden Ansprüche, **dadurch gekennzeichnet, dass** das Verfahren (100) den weiteren nachfolgenden Schritt umfasst, der von der Konfigurationseinheit (2) ausgeführt wird:
- Empfangen einer Bestätigungsnachricht von der einen oder mehreren Textilmaschinen (1) in dem Netzwerk (10), dass die übermittelte (104) Netzwerk-Konfiguration in der einen oder mehreren Textilmaschinen (1) eingestellt ist.

7. Verfahren (100) nach einem der vorhergehenden Ansprüche, **dadurch gekennzeichnet, dass** die Datenübertragung zwischen der Konfigurationseinheit (2) und der einen oder mehreren Textilmaschinen (1) mittels eines Netzwerkprotokolls, insbesondere mittels eines User Datagramm Protokolls (Engl.: UDP), vorzugsweise mittels eines Auto-Discovery-Protokolls, erfolgt.

8. Verfahren (100) nach einem der vorhergehenden Ansprüche, **dadurch gekennzeichnet, dass** die Datenübertragung in der Form eines Datagramms vorgesehen ist, wobei das Datagramm wenigstens einen Kopfteil aufweist.

9. Verfahren (100) nach Anspruch 8, **dadurch gekennzeichnet, dass** das Datagramm den Kopfteil und einen Datenteil umfasst. wobei das Datagramm eine Gesamtlänge aufweist, die so bemessen ist, dass eine sichere und vollständige Datenübertragung innerhalb eines Frames oder eines Datenübertragungsrahmens gewährleistet ist.

10. Verfahren (100) nach einem der vorhergehenden Ansprüche, **dadurch gekennzeichnet, dass** das Netzwerk (10) mindestens zwei Teilnetzwerke (11, 12), insbesondere Subnetze (11,12), umfasst,
wobei das Netzwerk (10) und jedes Teilnetzwerk (11, 12) jeweils eine Netzwerkschnittstelle (20, 21, 22) zum Kommunikationsnetz (30) umfasst,
wobei die Netzwerkschnittstelle (20, 21, 22) dazu angepasst ist, dass eine Datenübertragung zwischen der Konfigurationseinheit (2) und der einen oder mehreren Textilmaschinen (1) über die jeweilige Netzwerkschnittstelle (20, 21, 22) des Netzwerks (10) und/oder des Teilnetzwerks (10, 11) erfolgt,
wobei das Netzwerk (10) als ein lokales Netz, vorzugsweise LAN oder WLAN oder Ethernet, und/oder das Kommunikationsnetz (30) als ein Funknetz, vorzugsweise Bluetooth oder WLAN-Netz, ausgebildet ist.

11. System (50) für ein automatisiertes Übermitteln einer Netzwerk-Konfiguration, umfassend eine Konfigurationseinheit (2) und eine oder mehrere Textilmaschinen (1) in einem Netzwerk (10), wobei eine Datenübertragung zwischen einer Konfigurationseinheit (2) und der einen oder mehreren Textilmaschinen (1) über ein Kommunikationsnetz (30) zu dem Netzwerk (10) erfolgt,
wobei das System (50) dazu angepasst ist, das Verfahren (100) nach einem der vorhergehenden Ansprüche auszuführen.

12. System (50) nach Anspruch 11, **dadurch gekennzeichnet, dass** das Netzwerk (10) mindestens zwei Teilnetzwerke (11, 12), insbesondere Subnetze (11,12), umfasst, wobei das Netzwerk (10) und jedes Teilnetzwerk (11, 12) jeweils eine Netzwerkschnittstelle (20, 21, 22) zum Kommunikationsnetz (30) aufweist,
wobei die Netzwerkschnittstelle (20, 21, 22) dazu angepasst ist, dass eine Datenübertragung zwischen der Konfigurationseinheit (2) und der einen oder mehreren Textilmaschinen (1) über die jeweilige Netzwerkschnittstelle (20, 21, 22) des Netzwerks (10) und/oder des Teilnetzwerks (10, 11) erfolgt.

13. Vorrichtung (2) zur Datenverarbeitung, umfassend Mittel zur Ausführung der Schritte des Verfahrens (100) nach einem der Ansprüche 1 bis 10.

14. Computerprogramm (40), umfassend Befehle, die bei der Ausführung des Computerprogramms (40) durch einen Computer (2) diesen veranlassen, die Schritte des Verfahrens (100) nach einem der Ansprüche 1 bis 10 auszuführen.

15. Textilmaschine (1), umfassend eine Netzwerkschnittstelle (20, 21, 22) zu einem Kommunikationsnetz (30), wobei eine Datenübertragung zwischen der Textilmaschine (1) und einer Konfigurationseinheit (2) über die Netzwerkschnittstelle (20, 21, 22) zu dem Kommunikationsnetz (30) erfolgt, wobei die Netzwerkschnittstelle (20, 21, 22) dazu angepasst ist, das Verfahren nach einem der Ansprüche 1 bis 10 auszuführen.
